# EUROPÄISCHE PATENTSCHRIFT

(11) **EP 2 291 299 B1**
(45) Veröffentlichungstag und Bekanntmachung des Hinweises auf die Patenterteilung: **30.07.2014**
(21) Anmeldenummer: 09769256.0
(22) Anmeldetag: 23.06.2009
(51) Int. Cl.: B60P 3/075, B60P 7/08

(54) **LADUNGSSICHERUNGSELEMENT UND SYSTEM ZUR SICHERUNG EINER LADUNG**
LOAD-SECURING ELEMENT AND SYSTEM FOR SECURING A LOAD
ÉLÉMENT DE FIXATION DE CHARGEMENT ET SYSTÈME POUR FIXER UN CHARGEMENT

(30) Priorität: 23.06.2008 DE 102008029403; 07.08.2008 DE 102008036854
(43) Veröffentlichungstag der Anmeldung: 09.03.2011
(73) Patentinhaber: Spanset Inter AG, 8832 Wollerau (CH)
(72) Erfinder: MAMIÉ, André, CH-8807 Freienbach (CH)
(74) Vertreter: Cohausz & Florack
(86) Internationale Anmeldenummer: PCT/EP2009/057842
(87) Internationale Veröffentlichungsnummer: WO 2009/156407

(56) Entgegenhaltungen:
- GB-A- 1 259 959
- US-A- 3 477 104
- US-A- 3 685 778
- US-A- 5 265 992
- US-A- 5 873 688
- US-B1- 7 114 897

## Beschreibung

Die Erfindung betrifft ein Ladungssicherungselement und ein System zur Sicherung einer Ladung, das ein solches Ladungssicherungselement umfasst. Elemente und Systeme dieser Art werden insbesondere beim Transport von Fahrzeugen auf einem Fahrzeugtransporter benötigt.

Typischerweise weisen Transporter für Personenkraftwagen oder andere Landfahrzeuge in der Regel aus Stahlblech bestehende Fahrbahnen auf, auf denen die zu transportierenden Fahrzeuge zum Be- und Entladen verfahren werden können und auf denen die Fahrzeuge während des Transports stehen. Bei Transportern, die mehrere PWKs transportieren können, sind die Fahrbahnen meist als schmale, der Breite der Räder der zu transportierenden Fahrzeuge angepasste Bahnen ausgebildet, während sie sich bei für den Einzeltransport bestimmten Fahrzeugen, wie Abschleppwagen, in der Regel über die gesamte Breite des jeweiligen Transportfahrzeugs erstrecken.

Unabhängig von ihrer Formgebung sind die Transportbahnen von Fahrzeugtransportern üblicherweise mit regelmäßig angeordneten Lochungen versehen, um eine gute Griffigkeit für die Räder der zu transportierenden Fahrzeuge zu gewährleisten. Darüber hinaus werden die Öffnungen zum Befestigen von Lagesicherungen genutzt, mit denen das jeweilige Fahrzeug während des Transports fixiert wird. Bei diesen Ladungssicherungen handelt es sich um Anschlagmittel, typischerweise Bänder oder Ketten, die mit ihrem einen Ende mittels eines konventionellen Hakens in eine der Öffnungen der Transportbahn eingehakt und um eines der Räder des jeweiligen Fahrzeugs gelegt werden.

Ein gattungsgemäßer Ladungssicherungselement ist aus Dokument US 5,265,992 bekannt.

Mit ihrem anderen Ende wird das jeweilige Anschlagmittel dann mittels einer ebenfalls in eine der Öffnungen der Transportbahn eingehakten Spanneinrichtung verspannt. Um einen sicheren Halt der Fahrzeuge während des Transports zu gewährleisten, sind erhebliche Spannkräfte erforderlich. Dies gilt insbesondere dann, wenn die Transportbahn bezogen auf die Fahrbahn, auf der das Transportfahrzeug fährt, schräg angeordnet ist. In diesem Fall muss die Ladungssicherung nicht nur die während der Fahrt auftretenden dynamischen Kräfte, sondern auch noch durch das Eigengewicht des Fahrzeugs bedingte Gewichtskräfte aufnehmen.

Die für einen sicheren Halt benötigten hohen Spannkräfte führen an den Fahrbahnöffnungen, an denen die Anschlagmittel der Ladungssicherung gegen die Fahrbahn verspannt sind, zu erheblichen Belastungen der die jeweilige Öffnung umgebenden Randbereiche. Diese können so weit gehen, dass sich das Blech der Fahrbahn verformt, bis die Dehngrenze des Stahlwerkstoffs überschritten ist und bleibende Verformungen oder Risse entstehen. Treten derartige Beschädigung an einer der Öffnungen der Fahrbahn auf, so ist diese nicht mehr nutzbar, da sich die Haken der Anschlagmittel und der zum Verspannen benötigten Spanneinrichtungen nicht mehr sicher mit ihnen verhaken lassen. Die durch die beim Verspannen der Anschlagmittel auftretenden Belastungen hervorgerufenen Beschädigungen können so weit gehen, dass die Fahrbahnen insgesamt nicht mehr ausreichend stabil sind und dementsprechend ausgetauscht werden müssen. Ein weiteres Problem besteht darin, dass bei einer Verformung des jeweiligen Randbereichs einer Öffnung der Transportbahn nicht mehr sichergestellt ist, dass der Haken des Spannmittels sicher gehalten ist. Vielmehr besteht die Gefahr, dass der Haken in Folge der während des Transports auf ihm zusätzlich lastenden dynamischen Kräfte aus der Öffnung gleitet, so dass auch das jeweilige Fahrzeug nicht mehr gesichert ist.

Vor diesem Hintergrund bestand die Aufgabe der Erfindung darin, ein einfach handhabbares Ladungssicherungselement zu schaffen, mit dem auf einfache Weise sichergestellt ist, dass auch bei hohen Spannkräften die Gefahr einer Beschädigung der die jeweilige Öffnung umgebenden Randbereiche der jeweiligen Transportbahn auf eine Minimum reduziert ist. Ebenso sollte ein kostengünstiges System zur Sicherung einer Ladung vorgeschlagen werden, dass es sicher erlaubt, auch schwere oder unter ungünstigen Bedingungen positionierte Fahrzeuge zuverlässig und bei minimierter Gefahr einer Beschädigung der jeweiligen Fahrbahn zu sichern.

In Bezug auf das Ladungssicherungselement ist diese Aufgabe erfindungsgemäß dadurch gelöst worden, dass das Ladungssicherungselement gemäß Anspruch 1 ausgebildet ist. Vorteilhafte Ausgestaltungen und Verwendungsmöglichkeiten eines erfindungsgemäßen Ladungssicherungselements sind in den auf Anspruch 1 rückbezogenen Ansprüchen angegeben.

In Bezug auf das Ladungssicherungssystem ist die voranstehend genannte Aufgabe erfindungsgemäß durch ein gemäß Anspruch 12 ausgebildetes System gelöst worden. Vorteilhafte Ausgestaltungen und Verwendungsmöglichkeiten eines erfindungsgemäßen Ladungssicherungselements sind in den auf Anspruch 12 rückbezogenen Ansprüchen angegeben.

Ein erfindungsgemäßes Ladungssicherungselement weist einen Grundkörper auf, der einen Kopplungsabschnitt zum Ankoppeln eines Anschlagmittels, einen zum Einführen in eine Öffnung der jeweiligen Transportbahn vorgesehenen Stützabschnitt und einen Verbindungsabschnitt aufweist, der den Kopplungsabschnitt und den Stützabschnitt miteinander verbindet. Gleichzeitig hält der Verbindungsabschnitt den Kopplungsabschnitt und den Stützabschnitt so auf Abstand, dass an dem Grundkörper eine schlitzartige Aufnahme gebildet ist.

Diese Aufnahme ist dann an ihrer oberen Seite durch den Kopplungsabschnitt, an ihrer unteren Seite durch den Stützabschnitt und an ihrer Rückseite durch den Verbindungsabschnitt begrenzt. Im Übrigen ist die Aufnahme offen, wobei die Breite der Aufnahme einem Vielfachen ihrer Höhe entspricht. Auf diese Weise kann ein Blech oder ein ähnlich dünnes Element ungehindert in die schlitzförmige Aufnahme eingeführt werden. Gleichzeitig stellt die Breite der Aufnahme und die damit einhergehende verglichen mit ihrer Höhe große Breite der Aufnahme sicher, dass die von dem Ladungssicherungselement auf den Randbereich, der die jeweilige Öffnung, in die das Ladungssicherungselement mit seinem Stützabschnitt eingehakt ist, umgibt, ausgeübten Kräfte auf eine vergleichbar große Fläche verteilt werden. Auf diese Weise wird eine Überlastung des Blechs der Transportbahn sicher vermieden, so dass die Gefahr einer Beschädigung minimiert ist.

Der sichere Halt und die angestrebt großflächige Kräfteverteilung wird auch dadurch unterstützt, dass bei einem erfindungsgemäßen Ladungssicherungselement im Bereich der der Aufnahme zugeordneten Fläche des Kopplungsabschnitts mindestens eine Stützfläche ausgebildet ist, der gegenüberliegend eine Stützfläche des Stützabschnitts zugeordnet ist. Auf diese Weise kann sich das Ladungssicherungselement abhängig von der Wirkrichtung der jeweils auf ihm lastenden Spannkraft über den Kopplungsabschnitt oder den Stützabschnitt an der Transportbahn abstützen.

Schließlich ist dadurch, dass bei einem erfindungsgemäßen Lastsicherungselement auf der von der Aufnahme abgewandten Seite des Verbindungsabschnitts eine Gegenlagerfläche vorhanden ist, sichergestellt, dass das Ladungssicherungselement auch unter ungünstigen Bedingungen die ihm zugeordnete Befestigungsöffnung nicht selbsttätig verlässt. Vielmehr dient die Gegenlagerfläche bei in eine Öffnung gestecktem Stützabschnitt zum Abstützen des Grundkörpers gegen den Rand der jeweiligen Öffnung, wenn sich der Grundkörper unter Last um eine durch die Aufnahme verlaufende, durch die Berührung der Stützfläche des Kopplungsabschnitts mit dem die jeweilige Öffnung umgebenden Randbereich sich ergebende Drehachse dreht.

Durch seine erfindungsgemäße Gestaltung steht somit ein einfach handhabbares Ladungssicherungselement zur Verfügung, mit dem auf einfache Weise sichergestellt ist, dass auch bei hohen Spannkräften die Gefahr einer Beschädigung der die jeweilige Öffnung umgebenden Randbereiche der jeweiligen Transportbahn auf ein Minimum reduziert ist.

Ein besonderer Vorteil der Erfindung besteht dabei darin, dass der Grundkörper eines erfindungsgemäßen Ladungssicherungselements auf einfache Weise hergestellt werden kann. So eignet es sich besonders für eine Herstellung durch Schmieden oder Gießen eines Metallwerkstoffs, insbesondere von Stahl oder Aluminium.

Abhängig von der jeweils vorgesehenen Art der Montage kann die bei einem erfindungsgemäßen Ladungssicherungselement am Verbindungsabschnitt vorhandene Gegenlagerfläche so ausgebildet werden, dass die in der vorgesehenen Verwendung in Folge der jeweiligen Belastungsrichtung auftretenden Bewegungen optimal abgefangen werden können. Ist davon auszugehen, dass das Ladungssicherungselement durch die in der Praxis benötigte Spannkraft einem in die jeweils zugeordnete Öffnung der Transportbahn hineindrehenden Moment ausgesetzt ist, kann eine dadurch ausgelöste Bewegung dadurch abgefangen werden, dass die Gegenlagerfläche weg von dem Kopplungsabschnitt weist. Bei unter Last befindlichem Ladungssicherungselement stößt die Gegenlagerfläche dann gegen den Rand der zugeordneten Öffnung, so dass eine weitere Drehung des Elements sicher verhindert ist. Umgekehrt kann es ebenso zweckmäßig sein, die Gegenlagerfläche so anzuordnen, dass sie bei einer durch ein Drehmoment hervorgerufenen Bewegung des Ladungssicherungselements aus der Öffnung hinaus ebenfalls gegen den Rand der Öffnung stößt. Optimaler Weise ist daher die Gegenlagerfläche daher so angeordnet, dass sie in beide Bewegungsrichtungen durch Anschlagen an den Rand der Öffnung jeweils verhindert, dass das Ladungssicherungselement sich unter Last aus der Öffnung bewegt.

Ein besonders sicherer Halt des Ladungssicherungselements in der ihm jeweils zugeordneten Öffnung kann dadurch sichergestellt werden, dass die Länge der Aufnahme einem Vielfachen ihrer Höhe entspricht. Auf diese Weise weist die Aufnahme die Form eines tiefen Schlitzes von geringer Höhe auf. Bei einem in die Aufnahme eingeführten Blech besteht dann eine große Überdeckung zwischen dem Stützabschnitt und dem Kopplungsabschnitt einerseits und dem in der Aufnahme sitzenden Blech andererseits. Diese große Überdeckung stellt sicher, dass die von dem Ladungssicherungselement auf das Blech übertragenen Kräfte an einer vergleichbar weit vom Rand der jeweiligen Öffnung entfernten Stelle eingeleitet werden. Die Gefahr einer Verformung des Blechs ist damit zusätzlich vermindert.

Die Belastungen des Randes der dem Ladungssicherungselement im Montagezustand zugeordneten Öffnung kann zusätzlich dadurch vermindert werden, dass die die Ausnehmung begrenzende Fläche des Verbindungsabschnitts nach Art einer Kehle ausgebildet ist, bei der mindestens die Eckbereiche an den Übergängen zu den Stützflächen von Kopplungs- und Stützabschnitt ausgerundet sind. Eine insbesondere für Transportfahrbahnen, deren Öffnungen zwecks Aussteifung von einem umlaufenden, durch eine Tiefziehoperation erzeugten Kragen umgeben sind, geeignete Ausgestaltung der Erfindung ist dabei dadurch gekennzeichnet, dass die Kehlenform der die Ausnehmung begrenzenden Fläche des Verbindungsabschnitts in einen kehlenförmig ausgerundeten Bereich der Stützfläche des Kopplungsabschnitts ausläuft. Im Fall einer Bewegung des Ladungssicherungselements unter Last nimmt der kehlenförmige Bereich des Kopplungsabschnitts den vorstehenden Kragen des Randes der Öffnung auf, so dass auch dieser weitestgehend kraftfrei bleibt.

Eine die Handhabung eines erfindungsgemäßen Ladungssicherungselements weiter vereinfachende Ausgestaltung der Erfindung zeichnet sich dadurch aus, dass an mindestens einer der Stützflächen ein elastisches Element zum Abfedern der auf die jeweilige Stützfläche unter Last lastenden Kräfte angeordnet ist. Dieses beispielsweise als elastisches Kunststoffpolster ausgebildete elastische Element erlaubt eine besonders einfache Positionierung des Ladungssicherungselements und stellt bei Kontakt mit der Transportbahn aufgrund des in seinem Bereich erhöhten Reibungskoeffizienten sicher, dass das Element seine Position während des Anlegens des jeweiligen Anschlagmittels beibehält.

Die Vielseitigkeit eines erfindungsgemäßen Ladungssicherungselements ist zusätzlich dadurch befestigt, dass an dem Kopplungsabschnitt ein Kopplungsglied gelenkig befestigt ist, mit dem das jeweilige Spann- oder Anschlagmittel verkoppelbar ist. Die auf diese Weise erreichte gelenkige Ankopplung des Anschlagmittels erweist sich insbesondere dann als zweckmäßig, wenn das Anschlagmittel zum Befestigen der jeweiligen Last in einer von der Längsausrichtung der Transportbahn abweichenden Richtung geführt werden muss. Für diesen Anwendungsfall ist es besonders zweckmäßig, daß das Kopplungsglied erfindungsgemäß um eine Drehachse drehbar ist, deren gedachte Verlängerung die Stützfläche des Kopplungsabschnitts durchsticht. Typischerweise ist dabei die Drehachse im Wesentlichen so ausgerichtet, dass sie in Montagestellung senkrecht zur Transportbahn steht.

Eine weitere Sicherung gegen ein unbeabsichtigtes Lösen des Ladungssicherungselements aus der ihm zugeordneten Öffnung kann dadurch erreicht werden, dass auf der von der Aufnahme abgewandten Seite des Grundkörpers ein Sicherungsglied angeordnet ist, das um eine Schwenkachse aus einer an den Grundkörper angeschwenkten Stellung in eine Sicherungsposition schwenkbar ist, in der es mindestens mit einem Riegelabschnitt über den Grundkörper hinaussteht, so das Sicherungselement den Grundkörper gegen den Rand der zugeordneten Öffnung sichert. Das betreffende Sicherungsglied kann beispielsweise als manuell betätigbarer Hebel ausgeführt sein, der einen Vorsprung trägt, der bei von dem Grundkörper abgeschwenkter Stellung unter den die jeweilige Öffnung umgebenden Rand greift. Um dabei sicherzustellen, dass das Sicherungselement das Einführen des Ladungssicherungselements in die zugeordnete Öffnung nicht behindert, kann dem Sicherungsglied eine in den Grundkörper eingeformte Aufnahme zugeordnet sein, die so bemessen ist, dass das Sicherungsglied bei vollständig an den Grundkörper angeschwenkter Stellung innerhalb der Umhüllenden des Grundkörpers angeordnet ist.

Eine besonders stabile Positionierung des Ladungssicherungselements ergibt sich dann, wenn der Kopplungsabschnitt in seiner Breiten- oder Längsrichtung über den Stützabschnitt hinaussteht. Dabei ist der Kopplungsabschnitt bevorzugt so bemessen, dass er die dem Ladungssicherungselement jeweils zugeordnete Öffnung vollständig abdeckt, insbesondere über die sie umgebenden Ränder übersteht. Auf diese Weise ist eine optimale Verteilung der auf dem Sicherungselement im Einsatz lastenden Kräfte bei gleichzeitig optimalem Sitz gewährleistet.

Den voranstehenden Erläuterungen entsprechend umfasst ein erfindungsgemäßes System zur Sicherung einer Ladung auf einer mit Öffnungen versehenen Transportbahn ein erfindungsgemäß ausgestaltetes Ladungssicherungselement, ein band- oder seilförmiges Anschlagmittel, das im Einsatz mit dem Ladungssicherungselement verkoppelt ist, und ein mit einem Haken zum Einhaken in eine Öffnung der Transportbahn versehenen Spanneinrichtung zum Spannen des Anschlagmittels. Der Haken der Spanneinrichtung ist dabei selbstverständlich bevorzugt ebenfalls so ausgelegt, dass seine zur Anlage an den die zugeordnete Öffnung umgebenden Randbereich kommende Hakenfläche großflächig überträgt, um eine übermäßige Belastung des betreffenden Randbereichs zu vermeiden.

Um einen besonders sicheren Halt des Anschlagmittels auch an ungünstig geformten Gegenständen, wie beispielsweise an der Umfangsfläche eines Fahrzeugrades zu gewährleisten, kann das erfindungsgemäße Ladungssicherungssystem zusätzlich ein mit einem Haken zum Einhaken in eine Öffnung der Transportbahn versehenes Umlenkelement umfassen, das dazu vorgesehen ist, das Anschlagmittel auf seinem Weg von dem Ladungssicherungselement zur Spanneinrichtung umzulenken. Das Umlenkelement kann somit dazu genutzt, das Anschlagmittel so zu führen, dass es über einen optimal langen Weg über den jeweils lagezusichernden Gegenstand geführt ist.

Um auch dann, wenn die Lagesicherung an einem schwer zugänglichen Ort vorgenommen werden muss und die Spanneinrichtung einen manuell um eine Schwenkachse schwenkbaren Spannhebel aufweist, eine einfache Handhabbarkeit der Spanneinrichtung zu gewährleisten, kann ein zwischen dem Haken der Spanneinrichtung und der Schwenkachse des Spannhebels angeordneter Stützwinkel vorgesehen sein, der die Spanneinrichtung derart abstützt, dass eine gedachte Verlängerung der Schwenkachse des Spannhebels mit der Transportbahn einen spitzen Winkel einschließt. Der entsprechend schräg ausgerichtete Spannhebel ist dann leichter aus seitlicher Richtung erreich- und handhabbar.

Letzteres erweist sich insbesondere dann als vorteilhaft, wenn das erfindungsgemäße System zum Sichern der Lage eines Kraftfahrzeugs auf einer Transportfahrbahn eines Fahrzeugtransporters genutzt wird. Gerade bei diesem Anwendungsfall, für den sich sowohl das erfindungsgemäße Ladungssicherungselement als auch das erfindungsgemäße System besonders eignen, ergibt sich häufig die Situation, dass die Spanneinrichtung unter dem Fahrzeug angeordnet werden muss.

Selbstverständlich kann das erfindungsgemäße System auch ein an sich bekanntes Vorspanngerät umfassen, mit dem sich eine vorgegebene Spannkraft exakt einstellen bzw. ablesen lässt, welche Spannkraft in dem jeweiligen Anschlagmittel herrscht.

Nachfolgend wird die Erfindung anhand einer ein Ausführungsbeispiel darstellenden Zeichnung näher erläutert. Es zeigen:
- Fig. 1: eine erste Ausführung eines Ladungssicherungselements in Montagestellung in einer längsgeschnittenen Ansicht;
- Fig. 2: das Ladungssicherungselement gemäß Fig. 1 in einer perspektivischen Ansicht von vorne oben;
- Fig. 3: den Grundkörper des in den Figuren 1 und 2 dargestellten Ladungssicherungselements in einer perspektivischen Ansicht von vorne unten;
- Fig. 4: den Grundkörper des in den Figuren 1 und 2 dargestellten Ladungssicherungselements in einer perspektivischen Ansicht von hinten oben;
- Fig. 5: eine zweite Ausführung eines Ladungssicherungselements in einer ersten Montagestellung in einer perspektivischen Ansicht von vorne oben;
- Fig. 6: das in Fig. 5 gezeigte Ladungssicherungselement in einer zweiten Montagestellung in einer der Fig. 5 entsprechenden Ansicht;
- Fig. 7: eine dritte Ausführung eines Ladungssicherungselements während der Montagestellung in einer längsgeschnittenen Ansicht;
- Fig. 8: die in Fig. 7 dargestellte Ausführung des Ladungssicherungselements in Montagestellung in einer der Fig. 7 entsprechenden Ansicht;
- Fig. 9: ein System zur Ladungssicherung eines Kraftfahrzeugs auf einer Transportbahn eines Transportfahrzeugs in perspektivischer Ansicht;
- Fig. 10: eine in dem System gemäß Fig. 9 eingesetzte Spanneinrichtung in einer perspektivischen Ansicht;
- Fig. 11, 12: eine weitere Ausführung eines Ladungssicherungselements in zwei perspektivischen Ansichten.

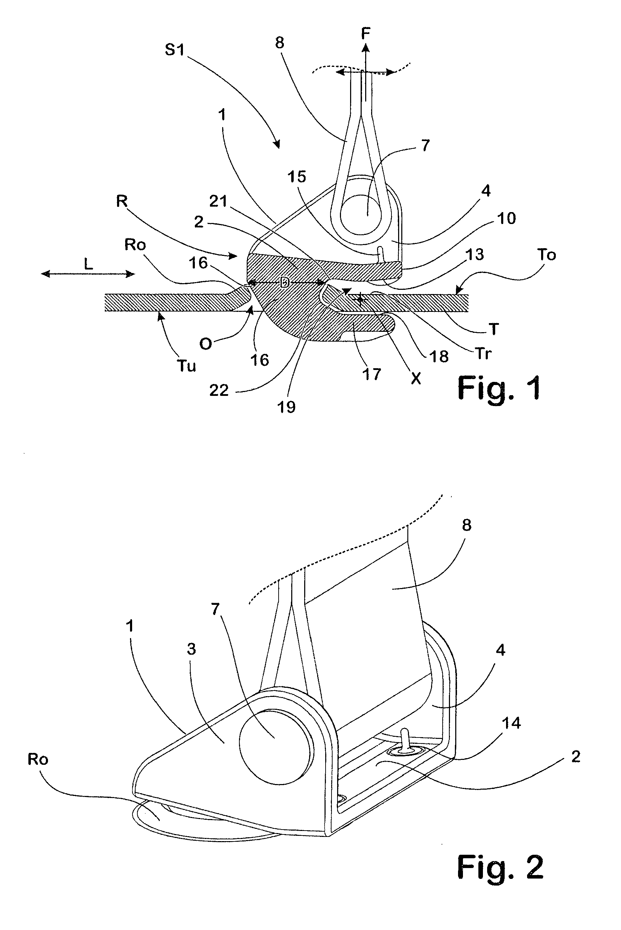

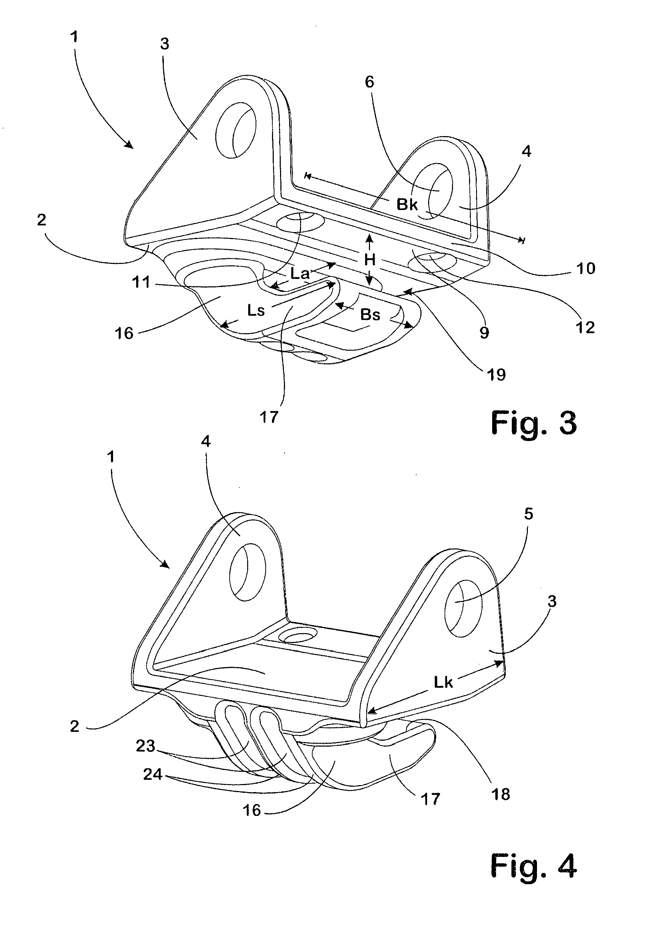

Das in den Figuren 1 und 2 gezeigte Lagesicherungselement S1 weist einen Grundkörper 1 auf, der in den Figuren 3 und 4 für sich alleine dargestellt ist.

Der Grundkörper 1 weist dabei einen in frontaler Ansicht von vorne U-förmigen Kopplungsabschnitt 2 auf, dessen Schenkel 3,4 nach oben von ihm abstehen und jeweils eine Durchgangsöffnung 5,6 aufweisen. Durch die Durchgangsöffnungen 5,6 ist eine sich über die Breite Bk des Kopplungsabschnitts 2 erstreckende Befestigungsachse 7 gesteckt, um die die Endschlaufe 8 eines hier weiter nicht sichtbaren Anschlagmittels gelegt ist. Bei dem betreffenden Anschlagmittel handelt es sich hier um ein breites Band, dessen Endschlaufe 8 in an sich bekannter Weise durch Umlegen und Vernähen des dem Ladungssicherungselement S1 zugeordneten Endes des Anschlagmittels gebildet ist.

Auf seiner von der Befestigungsachse 7 abgewandten Unterseite weist der Kopplungsabschnitt 2 eine im Wesentlichen ebene Stützfläche 9 auf, die an die freie Vorderkante 10 des Kopplungsabschnitts 2 angrenzt. Im Bereich der Stützfläche 9 sind in den Kopplungsabschnitt 2 zwei Durchgangsöffnungen 11,12 eingeformt, von denen jeweils eines benachbart zu den Schenkeln 3,4 angeordnet ist. In Richtung der Oberseite des Kopplungsabschnitts 2 verjüngen sich die Durchgangsöffnungen 11,12 derart, dass sie beim Austritt auf die Oberseite des Kopplungsabschnitts 2 einen deutlich kleineren Durchmesser aufweisen als im Bereich der Stützfläche 9.

In den Durchgangsöffnungen 11,12 sitzt jeweils ein aus einem elastischen Kunststoff gefertigtes Federelement 13,14, das an seinem der Oberseite des Kopplungsabschnitts 2 zugeordneten Ende einen Fortsatz 15 trägt. Dieser wird bei der Montage durch die jeweilige Durchgangsöffnung 11,12 gezogen, bis der Rand der im Bereich der Oberseite des Kopplungsabschnitt 2 engen Öffnung 11,12 in eine hier nicht sichtbare umlaufende Nut einrastet, die zwischen dem Fortsatz 15 und dem Hauptabschnitt des jeweiligen elastischen Elements 13,14 ausgebildet ist. Die Federelemente 13,14 sind so in an sich bekannter Weise formschlüssig in den Durchgangsöffnungen 11,12 gehalten, ohne dass es dazu zusätzlicher Mittel bedarf. Ihr Hauptabschnitt füllt dabei die Durchgangsöffnungen 11,12 aus und steht über die Stützfläche 9 des Kopplungsabschnitts 2 hinaus. Auf diese Weise federn die elastischen Elemente 13,14 bei Aufsetzen auf die zugeordnete Oberseite To der jeweiligen Transportbahn T Stöße ab und halten aufgrund einer erhöhten Reibung das Ladungssicherungselement S1 während des Anlegens des Anschlagmittels in seiner Position.

Auf seiner von der freien Vorderkante 10 abgewandten Rückseite R ist an den Kopplungsabschnitt 2 ein Verbindungsabschnitt 16 angeschlossen, der nach unten von dem Kopplungsabschnitt 2 wegweisend ausgerichtet ist. Der Verbindungsabschnitt 16 trägt einen Stützabschnitt 17, der sich im Wesentlichen parallel und mit Abstand zu dem Kopplungsabschnitt 2 in Richtung von dessen freien Vorderkante 10 erstreckt. Dabei weist der der Stützabschnitt 17 auf seiner dem Kopplungsabschnitt 2 zugeordneten Oberseite eine Stützfläche 18 auf, die im Wesentlichen parallel zur Stützfläche 9 des Kopplungsabschnitts 2 ausgerichtet ist.

Auf diese Weise begrenzen der Stützabschnitt 17 und der Kopplungsabschnitt 2 eine zwischen ihnen liegende, schlitzförmige Aufnahme 19 an ihrer Unter- bzw. Oberseite. An ihrer Rückseite ist die Aufnahme 19 durch den Verbindungsabschnitt 16 begrenzt. Alle übrigen Seiten der Aufnahme 19 sind offen. Auf diese Weise kann das Stahlblechmaterial, aus dem die Führungsbahn T geformt ist, in die Aufnahme 19 eingeführt werden, ohne dass es an den Verbindungsabschnitt 16 stößt.

Die Stützfläche 18 geht in einem kehlenförmig ausgeformten Übergang 20 in die der Aufnahme 19 zugeordnete Wandfläche des Verbindungsabschnitts 16 über. Genauso geht die betreffende Wandfläche des Verbindungsabschnitts 16 in einem kehlenartig ausgerundeten Übergang 21 in die Stützfläche 9 des Kupplungsabschnitts 2 über.

Auf der Rückseite R ist der Verbindungsabschnitt 16 so abgerundet geformt, dass er an dieser Seite in Seitenansicht (Fig. 1) gesehen ausgehend vom Kopplungsabschnitt 2 in einem Bogen in den Stützabschnitt 17 ausläuft. Der Verbindungsabschnitt 16 weist auf diese Weise im Anschluss an den Kopplungsabschnitt 2 seine größte Dicke D auf, die in Richtung des Stützabschnittes 17 kontinuierlich abnimmt. Die größte Dicke D des Verbindungsabschnitts 16 am Übergang zum Kopplungsabschnitt 2 ist dabei so bemessen, dass sie um ein geringes Übermaß größer ist als die in Längsrichtung L der Transportbahn T gemessene Weite der zugeordneten Öffnung O der Transportbahn T. Auf diese Weise ist auf der Rückseite R des Verbindungsabschnitts 16 angrenzend an die rückseitige Fläche des Kopplungsabschnitts 2 eine Gegenlagerfläche 22 gebildet, die gegen den die Öffnung O der Transportbahn T umgebenden Rand Ro stößt, wenn das Ladungssicherungselement S1 aufgrund von im Einsatz in Richtung der Rückseite R weisenden Kräften F in die Öffnung O um eine Drehachse X hineindreht, deren Lage in der Aufnahme 19 durch den Kontakt zwischen der Stützfläche 18 des Stützabschnitts 17 und der ihr zugeordneten Unterseite Tu der Transportbahn T bestimmt ist.

Zur Aussteifung und Gewichtsminimierung sind ausgehend von der Rückseite R in den Verbindungsabschnitt 16 Vertiefungen 23 eingeformt, die seitlich durch jeweils eine Rippe 24 begrenzt werden und im Bereich des rückwärtigen Endes des Stützabschnitts 17 auslaufen.

Der Stützabschnitt 17 steht zungenartig vom Verbindungsabschnitt 16 in Richtung der freien Vorderkante 10 des Grundkörpers ab und ist dabei im Wesentlichen parallel zum Kopplungsabschnitt 2 ausgerichtet. Seine in Längsrichtung L gemessene Länge Ls ist dabei kürzer als die Länge Lk des Kopplungsabschnitts 2. Die Breite Bs des Stützabschnitts 17 ist so an die Breite der zugeordneten Öffnung O der Transportbahn T angepasst, dass der Stützabschnitt 17 mit geringem Spiel in die Öffnung O eingeführt werden kann. Die Breite Bk des Kopplungsabschnitts 2 ist dagegen so groß, dass der Kopplungsabschnitt 2 seitlich über die Öffnung O hinaussteht und bei entsprechend ausgerichteter Belastung F großflächig auf dem die Öffnung O der Transportbahn T umgebenden Randbereich abgestützt ist (Fig. 2).

Die durch den Abstand der Stützfläche 18 des Stützabschnitts 17 von der Stützfläche 9 des Kopplungsabschnitts 2 bestimmte Höhe H der Aufnahme 19 ist so bemessen, dass das Blech der Transportbahn T mit dem die Öffnung O umgebenden, in Richtung der Oberseite To der Transportbahn T kragenartig ausgewölbten Rand Ro mit Spiel in die Aufnahme 19 eingeschoben werden kann. Dabei beträgt die in Längsrichtung L gemessene Länge La der Aufnahme 19 ein Vielfaches der Höhe H, so dass sich bei fertig montiertem Ladungssicherungselement S1 der Kopplungsabschnitt 2 und der Stützabschnitt 17 einerseits und der die Öffnung O umgebende Randbereich Tr der Transportbahn T um eine so große Strecke überdecken, dass die von dem Ladungssicherungselement S1 aufgenommenen Kräfte mit ausreichend großem Abstand zum Rand Ro in das Blech der Transportbahn T eingeleitet werden.

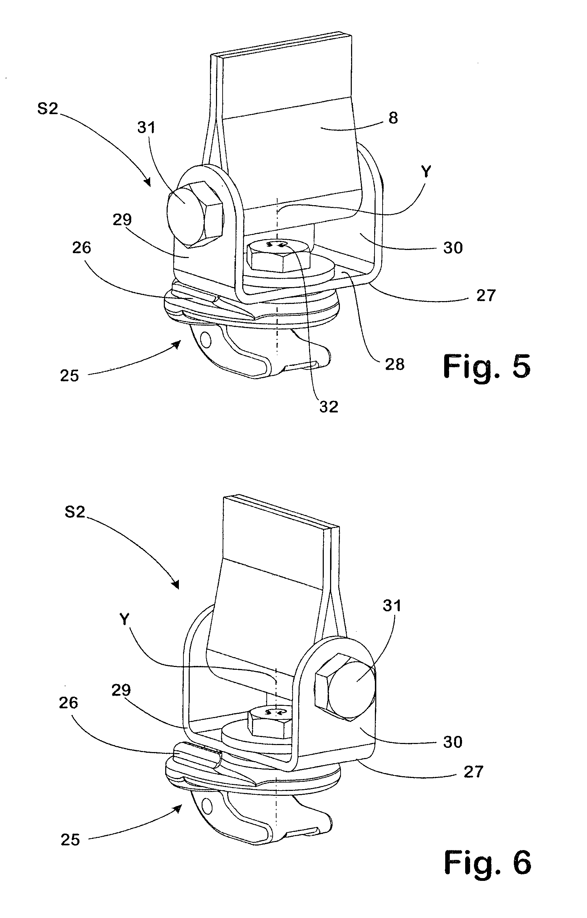

Das in den Figuren 5,6 gezeigte Ladungssicherungselement S2 weist einen Grundkörper 25 auf, der sich von dem Grundkörper 1 nur dadurch unterscheidet, dass sein Kopplungsabschnitt 26 keine Schenkel trägt, sondern dass auf dem Kopplungsabschnitt 26 ein mit dem jeweiligen Anschlagmittel A verkoppeltes Kopplungsglied 27 um eine Drehachse Y verdrehbar positioniert ist. Das Kopplungsglied 27 ist dabei U-förmig mit einem Basisabschnitt 28 und seitlich an den Grundabschnitt 28 angeformten Schenkel 29,30 ausgebildet, in die jeweils eine Öffnung eingeformt ist. Durch die Öffnungen der Schenkel 29,30 ist eine Befestigungsachse 31 gesteckt. Die Befestigungsachse 31 ist dabei wiederum durch die Endschlaufe 8 des Anschlagmittels A geführt.

In den Basisabschnitt 28 des Kopplungsgliedes 27 ist eine hier nicht sichtbare Öffnung eingeformt. Eine durch diese Öffnung geführte und in eine entsprechende Gewindeöffnung des Kopplungsabschnitts 26 eingeschraubte Schraube 32 bildet das Drehlager, um welches das Kopplungsglied 27 drehbar gelagert ist. Die Drehachse Y dieses Drehlagers ist dabei so ausgerichtet, dass ihre gedachte Verlängerung im Wesentlichen lotgerecht die Stützfläche des Kopplungsabschnitts 26 durchsticht.

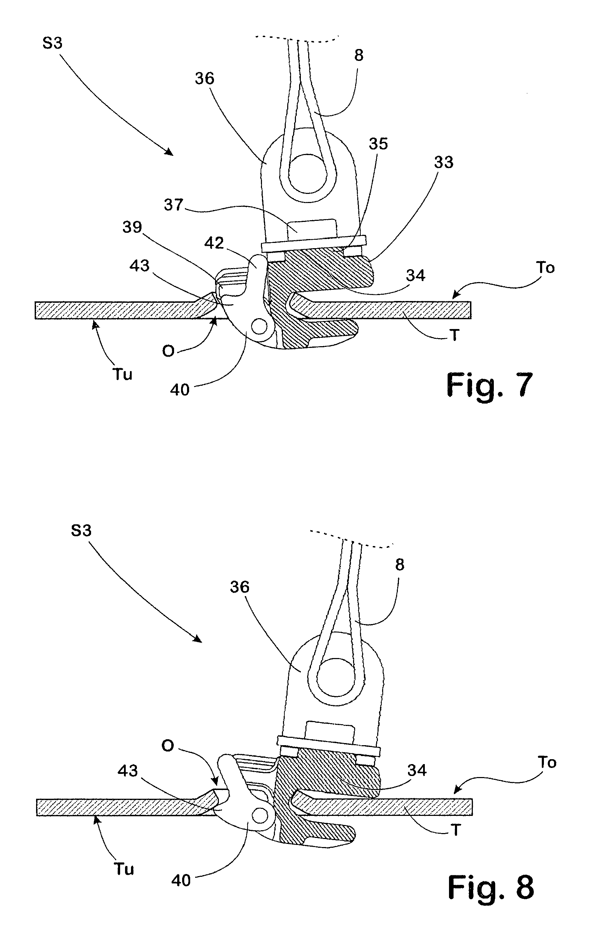

Auch das in den Figuren 7,8 dargestellte Ladungssicherungselement S3 weist einen dem Grundkörper 1 entsprechenden Grundkörper 33 auf. Anders als beim Grundkörper 1 trägt der Kopplungsabschnitt 34 des Grundkörpers 33 jedoch ebenfalls keine Schenkel. Stattdessen ist auf der Oberseite des Kopplungsabschnitts 34 ein sich über dessen Breite erstreckender Vorsprung 35 ausgeformt. Dieser Vorsprung 35 greift formschlüssig in eine Nut, die auf der zugeordneten Unterseite eines Kopplungsglieds 36 ausgebildet ist. Auf diese Weise ist die Position des Kopplungsgliedes 36 relativ zum Grundkörper 33 festgelegt. Mittels einer in den Grundkörper 33 eingeschraubten Schraube 37 ist das Kopplungsglied 36 zusätzlich fest mit dem Grundkörper 33 verbunden.

Im Bereich der in die Rückseite des Verbindungsabschnitts 38 des Grundkörpers 33 eingeformten Vertiefungen 39 sitzt jeweils ein nach Art eines Hebels ausgebildetes Sicherungselement 40, das um eine quer zur Längsrichtung L des Kopplungsgliedes 36 ausgerichtete Achse 41 verschwenkbar ist. Das Sicherungselement 40 weist dabei einen nach oben weisenden Hebelabschnitt 42 und einen an den Hebelabschnitt 42 angeformten Riegelabschnitt 43 auf, der von dem Grundkörper 33 wegweisend ausgerichtet ist. Dabei sind die Form des Riegelabschnitts 43 und seine Ausrichtung so gewählt, dass der Riegelabschnitt 43 bei an den Grundkörper 33 angeschwenkten Sicherungselement 40 vollständig in der ihm jeweils zugeordneten Vertiefung 39 aufgenommen ist. Der Riegelabschnitt 43 des Sicherungselements 40 steht in dieser Position nicht aus der Umhüllenden des Grundkörpers 33 hinaus, so dass der Stützabschnitt 44 und der Verbindungsabschnitt 45 des Grundkörpers 33 ungehindert in die zugeordnete Öffnung O eingeführt werden kann (Fig. 7).

Sobald die Montageposition erreicht ist (Fig. 8), werden die Sicherungselemente 40 vom Grundkörper 33 weggeschwenkt, so dass ihr Riegelabschnitt 43 unter die Unterseite Tu der Transportbahn T greift. Auf diese Weise sichert das Sicherungselement 40 das Ladungssicherungselement S3 auch unter ungünstigen Belastungen gegen ein unbeabsichtigtes Herausfallen aus der Öffnung O.

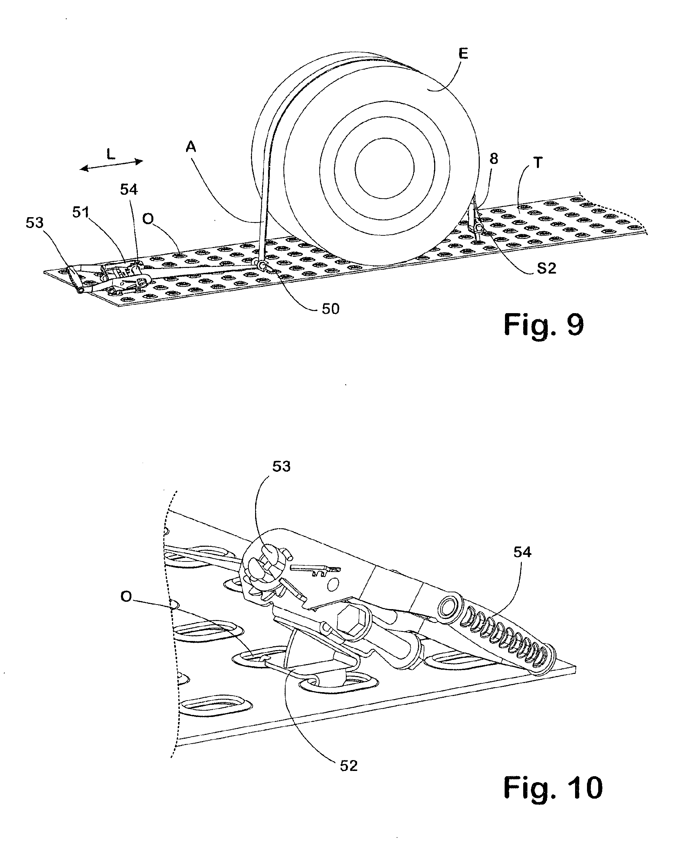

Das in Fig. 9 gezeigte System zum Sichern eines PKW's auf der Transportbahn T umfasst eines der voranstehend erläuterten Ladungssicherungselemente S1,S2 oder S3 (hier angedeutet ein Ladungssicherungselement S2), ein Umlenkelement 50 und eine Spanneinrichtung 51.

Während das Ladungssicherungselement S2 auf der einen Seite eines Rades E des hier weiter nicht dargestellten, zu sichernden PKW's in eine der Öffnungen O der Transportbahn T eingehakt ist, ist das Umlenkelement 50 in Längsrichtung L gesehen auf der anderen Seite des Rades E mittels eines die auftretende Belastung großflächig auf die Unterseite Tu der Transportbahn T verteilenden Hakens in eine andere Öffnung O eingehakt.

Die Spanneinrichtung 51 ist nach Art einer konventionellen manuell betätigbaren Spannratsche ausgebildet und umfasst einen Spannhebel 53, der um eine Schwenkachse 54 schwenkbar ist. Dabei ist die Spanneinrichtung 51 mittels zweier Haken in zwei in Längsrichtung L gesehen noch weiter als das Umlenkelement 50 von dem Rad E entfernte Öffnungen O der Transportbahn T eingehakt.

Die betreffenden Haken sind an einem Winkelstück 52 befestigt. Dieses stützt die Spanneinrichtung 51 so ab, dass ihre quer zur Längsrichtung L ausgerichtete Schwenkachse 54 und mit ihr der Spannhebel 53 mit der Transportbahn T einen spitzen Winkel einschließen. Auf diese Weise kann der Spannhebel 53 zum Betätigen der Spanneinrichtung 51 in eine seitlich der Transportbahn T und nach oben weisende Richtung bewegt werden. Dies erlaubt es, die Spanneinrichtung 51 auch dann noch problemlos zu betätigen, wenn über ihr die Karosserie des zu sichernden PKW's steht.

Mit dem Ladungssicherungselement S2 ist in der voranstehend bereits beschriebenen Weise das Anschlagmittel A mit seiner Endschlaufe 8 verkoppelt. Von dem Ladungssicherungselement S2 ist das Anschlagmittel A über den Umfang eines der Räder E des hier weiter nicht dargestellten PKW's geführt, bis es am Umlenkelement 50 in Richtung der Spanneinrichtung 51 umgelenkt wird. Durch Betätigen der Spanneinrichtung 51 kann das Anschlagmittel A gespannt werden, bis eine für die Lagesicherung ausreichende Spannkraft erzeugt ist.

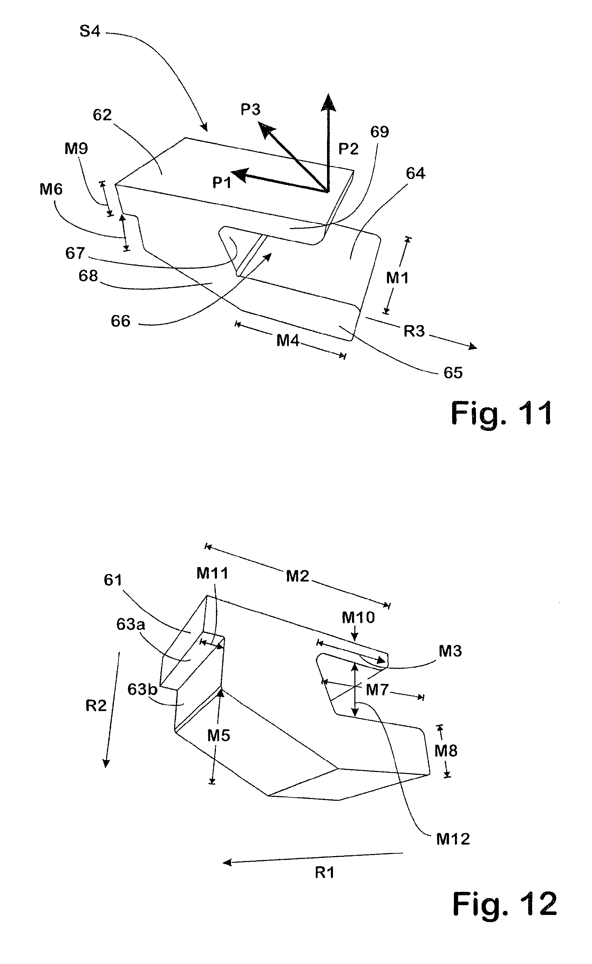

Anhand des in den Figuren 11 und 12 dargestellten Ladungssicherungselements S4 ist die prinzipielle Gestaltung eines erfindungsgemäßen Elements noch einmal erläutert.

Bei dem Ladungssicherungselement S4 können beispielsweise die Flächen 61 sowie 62 genutzt werden, um das Ladungssicherungselement S4 mit dem Anschlagmittel A zu verbinden. Dabei wird die wird jeweilige Last F typischerweise in einem frei wählbarem Bereich von 90° in dem von den hier dargestellten Pfeilen P1,P2 aufgespannten Bereich in die Fläche 61 eingeleitet, 2008 während die in Fläche 5 im Bedarfsfall zusätzlich zur Lasteinleitung in Richtung R1 genutzt werden kann. Eine für die Praxis typische Ausrichtung der Krafteinleitung ist in Fig. 11 durch den Pfeil P3 angedeutet.

Gegen ein Einsinken des Ladungssicherungselement S4 in Richtung R2 in die jeweils zugeordnete Öffnung O hinein wirkt eine erste Gegenlagerfläche 63a, mit der sich das Ladungssicherungselement S4 auf dem die Öffnung O umgebenden Randbereich abstützt.

Einem Verrutschen des Ladungssicherungselements S4 in Richtung R1 wird durch eine zweite Gegenlagerfläche 63b entgegengewirkt, mit der sich das Ladungssicherungselement S4 bei entsprechender Belastung gegen den Rand der Öffnung O abstützt. Hierdurch lässt sich gewährleisten, dass die Stützfläche 64 des Stützabschnitts 65 des Ladungssicherungselements S4 stets vollflächig an der zugeordneten Unterseite Tu der Transportbahn T anliegt.

Die die Aufnahme 66 des Ladungssicherungselements S4 an ihrer Rückseite begrenzende Fläche 67 des Verbindungsabschnitts 68 des Ladungssicherungselements S4 verhindert in Montagestellung ein Verrutschen in Richtung R3.

Das Maß M1 (Breite des Stützabschnitts 65) ist mindestens so ausgelegt, dass es in Verbindung mit dem Maß M2 (Länge des Kopplungsabschnitts 69 des Ladungssicherungselements S4) eine größtmögliche Anlagefläche bietet.

Das Maß M3 (Länge des Überstands des Kopplungsabschnitts 69 über der Aufnahme 66) ist maximal so beschaffen, dass sich das Lastaufnahmeelement S4 leichtgängig montieren lässt.

Die Maße M4 (Länge des Stützabschnitts 65) sowie M5 (Höhe des abgerundeten bzw. abgeschrägten rückwärtigen Bereichs des Verbindungsabschnitts 68) sind so beschaffen, dass sich das Lastaufnahmeelement S4 leicht montieren lässt.

Das Maß M6 (Höhe der Gegenlagerfläche 63b) ist mindestens so beschaffen, dass sich der das Lastaufnahmeelement S4 in Richtung R1 größtmöglich mit der Gegenlagerfläche 63b an die üblicherweise als Langloch ausgelegte zugeordnete Öffnung O der Transportfahrbahn T anlegt.

Das Maß M3 ist hier in Verbindung mit dem Maß M7 (Länge der Aufnahme 66) so ausgelegt, dass sich das Ladungssicherungselement S4 leichtgängig montieren lässt, und sich ein sicherer Halt in Richtung R3 sowie in Richtung R1 ergibt.

Das Maß M8 (Höhe des Stützabschnitts 65) ist so ausgeführt, dass es die auf ihm im praktischen Einsatz lastende Last ohne plastische Verformung aufnehmen kann. Gleiches gilt für das Maß M9 (Höhe des rückwärtigen Fortsatzes des Kopplungsabschnitts 69) und das Maß M10 (Dicke des Überstands des Kopplungsabschnitts (69) über der Aufnahme 66).

Das Maß M11 (Länge des rückseitigen Überstands des Kopplungsabschnitts 69) wird so ausgeführt, dass sich das Ladungssicherungselement S4 mit seiner Gegenlagerfläche 63a sicher auf dem jeweiligen Randbereich der zugeordneten Öffnung O abstützen kann.

Das Maß M12 (Höhe der Aufnahme 66) wird so ausgeführt, dass sich das Ladungssicherungselement S4 leichtgängig in der zugeordneten Öffnung O der Transportbahn T montieren lässt.

## Patentansprüche

1. Ladungssicherungselement mit einem Grundkörper (1), der einen Kopplungsabschnitt (2) zum Ankoppeln eines Anschlagmittels (A), einen zum Einführen in eine Öffnung (O) vorgesehenen Stützabschnitt (17) und einen Verbindungsabschnitt (16) aufweist, der den Kopplungsabschnitt (2) und den Stützabschnitt (17) miteinander verbindet und so auf Abstand hält, dass an dem Grundkörper (1) eine schlitzartige Aufnahme (19) gebildet ist, die an ihrer oberen Seite durch den Kopplungsabschnitt (2), an ihrer unteren Seite durch den Stützabschnitt (17) und an ihrer Rückseite durch den Verbindungsabschnitt (16) begrenzt und im Übrigen offen ist, wobei die Breite (Bs) der Aufnahme (19) einem Vielfachen ihrer Höhe (H) entspricht, wobei im Bereich der der Aufnahme (19) zugeordneten Fläche des Kopplungsabschnitts (2) mindestens eine Stützfläche (9) ausgebildet ist, der gegenüberliegend eine Stützfläche (18) des Stützabschnitts (17) zugeordnet ist, und wobei auf der von der Aufnahme (19) abgewandten Seite des Verbindungsabschnitts (16) eine Gegenlagerfläche (22) vorhanden ist, die bei in eine Öffnung (O) gestecktem Stützabschnitt (17) zum Abstützen des Grundkörpers (1) gegen den Rand (Ro) der jeweiligen Öffnung (O) dient, wenn sich der Grundkörper (1) unter Last (F) um eine durch die Aufnahme (19) verlaufende, durch die Berührung der jeweiligen Stützfläche (9,18) des Stützabschnitts (17) oder des Kopplungsabschnitts (2) mit dem die jeweilige Öffnung (O) umgebenden Randbereich (Tr) sich ergebende Drehachse (X) dreht, **dadurch gekennzeichnet, dass** an dem Kopplungsabschnitt (2) ein Kopplungsglied gelenkig befestigt ist, mit dem das jeweilige Spann- oder Anschlagmittel (A) verkoppelbar ist und **dass** das Kopplungsglied um eine Drehachse drehbar ist, deren gedachte Verlängerung die Stützfläche des Kopplungsabschnitts durchsticht.

2. Ladungssicherungselement nach Anspruch 1,
**dadurch gekennzeichnet, dass** die Gegenlagerfläche (22) weg von dem Kopplungsabschnitt (2) weist.

3. Ladungssicherungselement nach einem der voranstehenden Ansprüche, **dadurch**
**gekennzeichnet, dass** die Länge (La) der Aufnahme (19) einem Vielfachen ihrer Höhe (H) entspricht.

4. Ladungssicherungselement nach einem der voranstehenden Ansprüche, **dadurch**
**gekennzeichnet, dass** die die Ausnehmung (19) begrenzende Fläche des Verbindungsabschnitts (16) nach Art einer Kehle ausgebildet ist, bei der mindestens die Eckbereiche (20,21) an den Übergängen zu den Stützflächen (9,18) von Kopplungs- (2) und Stützabschnitt (17) ausgerundet sind.

5. Ladungssicherungselement nach Anspruch 4,
**dadurch gekennzeichnet, dass** die Kehlenform der die Ausnehmung (19) begrenzenden Fläche des Verbindungsabschnitts (16) in einen kehlenförmig ausgerundeten Bereich der Stützfläche (9) des Kopplungsabschnitts (2) ausläuft.

6. Ladungssicherungselement nach einem der voranstehenden Ansprüche, **dadurch**
**gekennzeichnet, dass** an mindestens einer der Stützflächen (9) ein elastisches Element (13,14) zum Abfedern der auf die jeweilige Stützfläche (9) lastenden Kräfte (F) angeordnet ist.

7. Ladungssicherungselement nach einem der voranstehenden Ansprüche, **dadurch**
**gekennzeichnet, dass** auf der von der Aufnahme abgewandten Seite des Grundkörpers (1) ein Sicherungsglied angeordnet ist, das um eine Schwenkachse aus einer an den Grundkörper angeschwenkten Stellung in eine Sicherungsposition schwenkbar ist, in der es den Grundkörper gegen den Rand der Öffnung sichert, in die der Stützabschnitt des Grundkörpers eingesteckt ist.

8. Ladungssicherungselement nach Anspruch 7,
**dadurch gekennzeichnet, dass** dem Sicherungsglied eine in den Grundkörper eingeformte Aufnahme zugeordnet ist, die so bemessen ist, dass das Sicherungsglied mindestens mit seinen bei vollständig an den Grundkörper angeschwenkter Stellung innerhalb der Umhüllenden des Grundkörpers (1) angeordnet ist.

9. Ladungssicherungselement nach einem der voranstehenden Ansprüche, **dadurch**
**gekennzeichnet, dass** der Kopplungsabschnitt (2) in seiner Breiten- oder Längsrichtung über den Stützabschnitt (17) hinaussteht.

10. System zur Sicherung einer Ladung auf einer mit Öffnungen (O) versehenen Transportbahn (T), mit einem gemäß einem der voranstehenden Ansprüche ausgebildeten Ladungssicherungselement (S1,S2,S3), einem band- oder seilförmigen Anschlagmittel (A), das im Einsatz mit dem Ladungssicherungselement verkoppelt ist, und einer mit einem Haken zum Einhaken in eine Öffnung der Transportbahn versehenen Spanneinrichtung zum Spannen des Anschlagmittels (A).

11. System nach Anspruch 10, **dadurch**
**gekennzeichnet, dass** es ein mit einem Haken zum Einhaken in eine Öffnung der Transportbahn versehenes Umlenkelement umfasst, das dazu vorgesehen ist, das Anschlagmittel (A) auf seinem Weg von dem Ladungssicherungselement (S1,S2,S3) zur Spanneinrichtung umzulenken.

12. System nach einem der Ansprüche 10 oder 11,
**dadurch gekennzeichnet, dass** die Spanneinrichtung einen manuell um eine Schwenkachse schwenkbaren Spannhebel umfasst und **dass** ein zwischen dem Haken der Spanneinrichtung und der Schwenkachse des Spannhebels angeordneter Stützwinkel die Spanneinrichtung derart abstützt, dass eine gedachte Verlängerung der Schwenkachse des Spannhebels mit der Transportbahn (T) einen spitzen Winkel einschließt.

## Claims

1. Load securing element with a base body (1), which has a coupling portion (2) for coupling a stop means (A), a support portion (17) provided for insertion into an opening (O), and a connecting portion (16), which connects the coupling portion (2) and the support portion (17) to one another and thus keeps them spaced apart in such a way that a slot-like receiver (19) is formed on the base body (1), which receiver is delimited at its upper side by the coupling portion (2), at its lower side by the support portion (17) and at its rear by the connecting portion (16) and is otherwise open, wherein the width (Bs) of the receiver (19) corresponds to a multiple of its height (H), at least one support face (9) being formed in the region of the face of the coupling portion (2) associated with the receiver (19), a support face (18) of the support portion (17) being associated with said support face (9) and opposing it, a counter-bearing face (22) being present on the side of the connecting portion (16) remote from the receiver (19), said counter-bearing face, when the support portion (17) is inserted in an opening (O), being used to support the base body (1) against the edge (Ro) of the respective opening (O), when the base body (1) rotates under the load (F) about a rotational axis (X) extending through the receiver (19) and being produced by the contact of the respective support face (9, 18) of the support portion (17) or the coupling portion (2) with the edge region (Tr) surrounding the respective opening (O), **characterised in that** a coupling member, to which the respective tensioning or stop means (A) can be coupled, is fastened to the coupling portion (2) in an articulated manner, the coupling member being rotatable about a rotational axis, the imaginary extension of which penetrates the support face of the coupling portion.

2. Load securing element according to claim 1, **characterised in that** the counter-bearing face (22) points away from the coupling portion (2).

3. Load securing element according to any one of the preceding claims, **characterised in that** the length (La) of the receiver (19) corresponds to a multiple of its height (H).

4. Load securing element according to any one of the preceding claims, **characterised in that** the face of the connecting portion (16) limiting the recess (19) is formed in the manner of a throat, in which at least the corner region (20, 21) at the transitions to the support faces (9, 18) of the coupling (2) and support portion (17) are rounded.

5. Load securing element according to claim 4, **characterised in that** the throat form of the face of the connecting portion (16) limiting the recess (19) terminates in a throat-shaped rounded region of the support face (9) of the coupling portion (2).

6. Load securing element according to any one of the preceding claims, **characterised in that** a resilient element (13, 14) for cushioning the forces (F) loading the respective support face (9) is arranged on at least one of the support faces (9).

7. Load securing element according to any one of the preceding claims, **characterised in that** arranged on the side of the base body (1) remote from the receiver is a securing member, which can be pivoted about a pivot axis from a position pivoted onto the base body into a securing position, in which it secures the base body against the edge of the opening, into which the support portion of the base body is inserted.

8. Load securing element according to claim 7, **characterised in that** a receiver formed into the base body is associated with the securing member, which receiver is dimensioned such that the securing member, at least in its position completely pivoted onto the base body, is arranged inside the envelope of the base body (1).

9. Load securing element according to any one of the preceding claims, **characterised in that** the coupling portion (2), in its width or longitudinal direction, extends beyond the support portion (17).

10. System for securing a load on a transport path (T) provided with openings (O), with a load securing element (S1, S2, S3) formed according to any one of the preceding claims, a band-shaped or cable-shaped stop means (A), which is coupled to the load securing element during use, and a tensioning device provided with a hook for hooking into an opening of the transport path to tension the stop means (A).

11. System according to claim 10, **characterised in that** it comprises a deflection element provided with a hook for hooking into an opening of the transport path, which deflection element is provided to deflect the stop means (A) on its path from the load securing element (S1, S2, S3) to the tensioning device.

12. System according to either of claims 10 or 11, **characterised in that** the tensioning device comprises a tensioning lever, which can be pivoted manually about a pivot axis, and **in that** a support angle arranged between the hook of the tensioning device and the pivot axis of the tensioning lever supports the tensioning device in such a way that an imaginary extension of the pivot axis of the tensioning lever encloses an acute angle with the transport path (T).

## Revendications

1. Elément de fixation de sécurité de charge avec un corps de base (1) qui est doté d'une section de couplage (2) pour coupler un moyen de maintien (A), d'une section de support (17) qui est destinée à être insérée dans une ouverture (O), et d'une section de liaison (16), qui relie ensemble la section de couplage (2) et la section de support (17) et les maintient à distance de manière à former, sur le corps de base (1), un réceptacle (19) en forme de fente qui est limité sur sa face supérieure par la section de couplage (2), sur sa face inférieure par la section de support (17) et sur sa face arrière par la section de liaison (16), et est ouvert par ailleurs, la largeur (Bs) du réceptacle (19) correspondant à un multiple de sa hauteur (H), sachant que, dans la région de la face de la section de couplage (2) associée au réceptacle (19), est formée au moins une surface de support (9) à laquelle est associée, vis-à-vis, une surface de support (18) de la section de support (17), et sachant que, sur la face de la section de liaison (16) opposée au réceptacle (19), est prévu un contre-appui (22) qui, quand une section de support (17) est insérée dans une ouverture (O), sert à soutenir le corps de base (1) contre le bord (Ro) de l'ouverture (O) respective quand le corps de base (1) sous charge (F) tourne autour d'un axe de rotation (X) qui, passant à travers le réceptacle (19), résulte de l'entrée en contact de la face de support respective (9, 18) de la section de support (17) ou de la section de couplage (2) avec la zone marginale (Tr) entourant l'ouverture (O) respective, **caractérisé en ce que**, sur la section de couplage (2), est fixé de manière articulée un organe de couplage avec lequel le moyen de serrage ou de maintien (A) peut être couplé, et q u e l'organe de couplage peut tourner autour d'un axe de rotation dont le prolongement imaginaire traverse la surface de support de la section de couplage.

2. Elément de fixation de sécurité de charge selon la revendication 1,
**caractérisé en ce que** la surface de contre-appui (22) est dirigée à l'opposé de la section de couplage (2).

3. Elément de fixation de sécurité de charge selon l'une des revendications précédentes,
**caractérisé en ce que** la longueur (La) du réceptacle (19) correspond à un multiple de sa hauteur (H).

4. Elément de fixation de sécurité de charge selon l'une des revendications précédentes,
**caractérisé en ce que** la face de la section de liaison (16), qui limite le réceptacle (19), est formée à la manière d'une gorge, dans laquelle au moins les zones d'angles (20, 21) sont arrondies aux endroits de raccordement aux faces de support (9, 18) de la section de couplage (2) et de la section de support (17).

5. Elément de fixation de sécurité de charge selon la revendication 4,
**caractérisé en ce que** la face de la section de liaison (16) en forme de gorge, qui limite le réceptacle (19), se raccorde à une zone arrondie en forme de gorge de la face de support (9) de la section de couplage (2).

6. Elément de fixation de sécurité de charge selon l'une des revendications précédentes,
**caractérisé en ce que**, sur au moins l'une des faces de support (9), est disposé un élément élastique (13, 14) qui est destiné à amortir les forces (F) qui agissent sur la face de support (9) respective.

7. Elément de fixation de sécurité de charge selon l'une des revendications précédentes,
**caractérisé en ce que**, sur la face du corps de base (1) opposée au réceptacle, est disposé un organe de sécurité qui peut pivoter autour d'un axe de pivotement pour passer d'une position pivotée sur le corps de base à une position de fixation de sécurité dans laquelle il maintient le corps de base contre le bord de l'ouverture dans laquelle la section de support du corps de base est insérée.

8. Elément de fixation de sécurité de charge selon la revendication 7,
**caractérisé en ce qu**' à l'organe de fixation de sécurité est associé un réceptacle qui, formé dans le corps de base (1), est dimensionné de telle manière que ledit organe de fixation de sécurité soit enveloppé par les extrémités du corps de base (1), au moins dans sa position complètement pivotée sur le corps de base (1).

9. Elément de fixation de sécurité de charge selon l'une des revendications précédentes,
**caractérisé en ce que** la section de couplage (2), dans le sens de sa largeur ou dans le sens de sa longueur, fait saillie au-delà de la section de support (17).

10. Système de fixation de sécurité de charge sur une bande de transport (T) pourvue d'ouvertures (O), qui est doté d'un l'élément de fixation de sécurité de charge (S1, S2, S3) réalisé selon l'une des revendications précédentes, d'un moyen de maintien (A) en forme de sangle ou de câble, qui, lors de l'utilisation, est couplé avec l'élément de fixation de sécurité de charge, et d'un dispositif de serrage, pourvu d'un crochet destiné à s'accrocher dans une ouverture de la bande de transport, pour tendre le moyen de maintien (A).

11. Système selon la revendication 10,
**caractérisé en ce qu'**il comprend un élément de renvoi qui, pourvu d'un crochet destiné à s'accrocher dans une ouverture de la bande de transport, est prévu pour dévier vers le dispositif de tension le moyen de maintien (A) sur son chemin depuis l'élément de fixation de sécurité (S1, S2, S3).

12. Système selon l'une des revendication 10 ou 11,
**caractérisé en ce que** le dispositif de serrage comprend un levier qui peut être pivoté manuellement autour d'un axe de pivotement et qu'une cornière d'appui, qui est disposée entre le crochet du dispositif de serrage et l'axe de pivotement du levier de pivotement, soutient le dispositif de serrage de telle manière qu'un prolongement imaginaire de l'axe de pivotement du levier de pivotement forme un angle aigu avec la bande de transport (T).
